# EUROPEAN PATENT APPLICATION

(11) **EP 3 900 950 A1**
(43) Date of publication of application: **27.10.2021**
(21) Application number: 19901336.8
(22) Date of filing: 19.12.2019
(51) Int. Cl.: B60C 1/00, C08L 7/00, C08L 9/00, C08L 9/06, C08L 21/00, C08L 53/00, C08L 67/00, C08K 3/04

(54) **RUBBER COMPOSITION AND TIRE**

(30) Priority: 19.12.2018 JP 2018237217
(71) Applicant: BRIDGESTONE CORPORATION, Chuo-ku Tokyo 104-8340 (JP)
(72) Inventor: MIENO, Kana, Tokyo 104-8340 (JP)
(74) Representative: Oxley, Robin John George
(86) International application number: PCT/JP2019/049945
(87) International publication number: WO 2020/130105

(57) **Abstract**

Provided is a rubber composition where both the steering stability and the low rolling resistance are achieved at a high level. The rubber composition contains a rubber component (A), a filler (B), and a thermoplastic resin (C), where the filler (B) contains carbon black, the carbon black is 30 parts by mass to 90 parts by mass with respect to 100 parts by mass of the rubber component (A), the thermoplastic resin (C) is 1 part by mass to 85 parts by mass with respect to 100 parts by mass of the rubber component (A), the thermoplastic resin (C) contains a styrene-alkylene block copolymer, and an alkylene block of the styrene-alkylene block copolymer has a -(CH₂-CH(C₂H₅))- unit (C_{A}) and a -(CH₂-CH₂)- unit (C_{B}), and a total content of the unit (C_{A}) is 40 mass% or more with respect to total mass of the unit (C_{A}) and the unit (C_{B}).

## Description

### CROSS REFERENCE TO RELATED APPLICATION

This application claims priority to Japanese Patent Application No. 2018-237217 filed on December 19, 2018, the entire disclosure of which is incorporated herein by reference.

### TECHNICAL FIELD

This disclosure relates to a rubber composition and a tire.

### BACKGROUND

Tires are required to improve the fuel efficiency. There is a method of reducing the hysteresis loss of a rubber composition to reduce the rolling resistance of a tire, thereby improving the fuel efficiency of the tire.

Tires are also required to improve the steering stability on a dry road surface. By increasing the rigidity of a base rubber such as a tread base portion of a tire, the cornering power of the tire is improved, and the steering stability of the tire on a dry road surface can be improved (see, for example, JP 2014-189738 A (PTL 1)).

### CITATION LIST

### Patent Literature

PTL 1: JP 2014-189738 A

### SUMMARY

### (Technical Problem)

However, there is room to achieve both the steering stability and the low rolling resistance of a tire at a higher level.

It could thus be helpful to provide a rubber composition in which both the steering stability and the low rolling resistance are achieved at a high level. Further, it could also be helpful to provide a tire in which both the steering stability and the low rolling resistance are achieved at a high level.

### (Solution to Problem)

The rubber composition of the present disclosure contains a rubber component (A), a filler (B), and a thermoplastic resin (C), where
the filler (B) contains carbon black,
an amount of the carbon black is 30 parts by mass to 90 parts by mass with respect to 100 parts by mass of the rubber component (A),
an amount of the thermoplastic resin (C) is 1 part by mass to 85 parts by mass with respect to 100 parts by mass of the rubber component (A),
the thermoplastic resin (C) contains a styrene-alkylene block copolymer, and
an alkylene block of the styrene-alkylene block copolymer has a -(CH₂-CH(C₂H₅))- unit (C_{A}) and a -(CH₂-CH₂)- unit (C_{B}), and a total content of the unit (C_{A}) is 40 mass% or more with respect to total mass of the unit (C_{A}) and the unit (C_{B}).

In this way, both the steering stability and the low rolling resistance of the rubber composition can be achieved at a high level.

The tire of the present disclosure is a tire using the above rubber composition in a base tread portion.

In this way, both the steering stability and the low rolling resistance of the tire can be achieved at a high level.

### (Advantageous Effect)

According to the present disclosure, it is possible to provide a rubber composition in which both the steering stability and the low rolling resistance are achieved at a high level. According to the present disclosure, it is possible to provide a tire in which both the steering stability and the low rolling resistance are achieved at a high level.

### DETAILED DESCRIPTION

The following describes an embodiment of the present disclosure. These descriptions are for the purpose of exemplifying the present disclosure and do not limit the present disclosure in any way.

In the following description, a rubber component (A), a filler (B), and a thermoplastic resin (C) may be referred to as a component (A), a component (B), and a component (C), respectively.

In the present disclosure, a numerical range includes the upper limit value and the lower limit value of the range unless otherwise specified. For example, "30 parts by mass to 90 parts by mass" means 30 parts by mass or more and 90 parts by mass or less.

### (Rubber composition)

A rubber composition of the present disclosure contains a rubber component (A), a filler (B), and a thermoplastic resin (C), where
the filler (B) contains carbon black,
an amount of the carbon black is 30 parts by mass to 90 parts by mass with respect to 100 parts by mass of the rubber component (A),
an amount of the thermoplastic resin (C) is 1 part by mass to 85 parts by mass with respect to 100 parts by mass of the rubber component (A),
the thermoplastic resin (C) contains a styrene-alkylene block copolymer, and
an alkylene block of the styrene-alkylene block copolymer has a -(CH₂-CH(C₂H₅))- unit (C_{A}) and a -(CH₂-CH₂)- unit (C_{B}), and a total content of the unit (C_{A}) is 40 mass% or more with respect to total mass of the unit (C_{A}) and the unit (C_{B}).

### <Rubber component (A)>

In the present disclosure, the rubber component (A) may be a known rubber component used in rubber compositions. Examples of the component (A) include natural rubber (NR), synthetic isoprene rubber (IR), styrene butadiene rubber (SBR), butadiene rubber (BR), isoprene butadiene copolymer, ethylene butadiene copolymer, propylene butadiene copolymer, and modified derivatives thereof.

The component (A) may be used alone or in combination of two or more.

In the rubber composition of the present disclosure, the rubber component (A) is preferably at least one selected from the group consisting of natural rubber, synthetic isoprene rubber, styrene butadiene rubber and butadiene rubber.

In this way, both the steering stability and the low rolling resistance can be achieved at a higher level.

### <Filler (B)>

In the present disclosure, the component (B) contains carbon black, and the amount of carbon black is 30 parts by mass to 90 parts by mass with respect to 100 parts by mass of the rubber component (A).

The carbon black is not particularly limited, and known carbon black can be appropriately selected and used. Examples of the carbon black include IISAF, ISAF, HAF, FEF, GPF grade carbon black.

The nitrogen adsorption specific surface area (N₂SA) of the carbon black may be appropriately adjusted, and is, for example, 30 m²/g to 300 m²/g. In the present disclosure, the N₂SA of the carbon black is measured according to JIS K 6217-2.

In the rubber composition of the present disclosure, the nitrogen adsorption specific surface area (N₂SA) of the carbon black is preferably 30 m²/g to 300 m²/g or 40 m²/g to 150 m²/g, more preferably 50 m²/g to 130 m²/g, and still more preferably 60 m²/g to 110 m²/g.

In this way, the low rolling resistance and the breaking resistance are improved.

The ratio of the carbon black in the component (B) may be appropriately adjusted. For example, it is 50 mass% or more, 60 mass% or more, 70 mass% or more, 80 mass% or more, 90 mass% or more, 95 mass% or more, or 100 mass%. Further, the ratio of the carbon black in the component (B) is 100 mass% or less, less than 100 mass%, 95 mass% or less, 90 mass% or less, 80 mass% or less, 70 mass% or less, or 60 mass% or less, for example.

The amount of the carbon black may be 30 parts by mass to 90 parts by mass with respect to 100 parts by mass of the rubber component (A). For example, the amount of the carbon black is 40 parts by mass or more, 50 parts by mass or more, 60 parts by mass or more, 70 parts by mass or more, or 80 parts by mass or more with respect to 100 parts by mass of the component (A). Further, the amount of the carbon black is 80 parts by mass or less, 70 parts by mass or less, 60 parts by mass or less, 50 parts by mass or less, or 40 parts by mass or less with respect to 100 parts by mass of the component (A), for example.

The component (B) at least contains carbon black, and a known filler used in rubber compositions may be used in addition to carbon black. Examples of the component (B) other than carbon black include silica, aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate.

The component (B) may be used alone or in combination of two or more.

The amount of the component (B) may be appropriately adjusted as long as the amount of the carbon black is 30 parts by mass to 90 parts by mass with respect to 100 parts by mass of the rubber component (A). The amount of the component (B) is, for example, 30 parts by mass to 100 parts by mass with respect to 100 parts by mass of the component (A).

### <Thermoplastic resin (C)>

The thermoplastic resin (C) contains a styrene-alkylene block copolymer.

### -Styrene-alkylene block copolymer

The styrene-alkylene block copolymer as the component (C) is a copolymer having a block derived from a styrene-based monomer and an alkylene block. The alkylene block of the styrene-alkylene block copolymer has a -(CH₂-CH(C₂H₅))- unit (C_{A}) and a -(CH₂-CH₂)- unit (C_{B}), and the total content of the unit (C_{A}) is 40 mass% or more with respect to the total mass of the unit (C_{A}) and the unit (C_{B}).

The total styrene content of the styrene-alkylene block copolymer (total content of the block derived from a styrene-based monomer) is, for example, 30 mass% or more, or 30 mass% to 60 mass%. When the total styrene content is 30 mass% or more, the steering stability is improved.

In the rubber composition of the present disclosure, the total styrene content of the styrene-alkylene block copolymer is preferably 40 mass% or more.

In this way, the steering stability is further improved.

The total styrene content of the styrene-alkylene block copolymer is preferably 50 mass% or more. In this way, the steering stability is further improved.

In the present disclosure, the styrene content and the content of each unit of the alkylene block of the styrene-alkylene block copolymer are determined by the integral ratio of ¹H-NMR.

The styrene block of the styrene-alkylene block copolymer has a unit derived from a styrene-based monomer (obtained by polymerizing a styrene-based monomer). Examples of such a styrene-based monomer include styrene, α-methylstyrene, p-methylstyrene, and vinyltoluene. Among these, the styrene-based monomer is preferably styrene.

In the rubber composition of the present disclosure, the alkylene block of the styrene-alkylene block copolymer has a -(CH₂-CH(C₂H₅))- unit (C_{A}) and a -(CH₂-CH₂)- unit (C_{B}), and the total content of the unit (C_{A}) is 40 mass% or more with respect to the total mass of the unit (C_{A}) and the unit (C_{B}). In this way, good steering stability can be ensured without deteriorating low rolling resistance.

The total content of the unit (C_{A}) with respect to the total mass of the unit (C_{A}) and the unit (C_{B}) is preferably 40 mass% or more, more preferably 50 mass% or more, still more preferably 60 mass% or more, and further preferably 65 mass% or more. Further, it is preferably 90 mass% or less, more preferably 85 mass% or less, and still more preferably 80 mass% or less.

The styrene-alkylene block copolymer may be a commercially available product such as a styrene/ethylene butylene/styrene block copolymer (SEBS). Examples of such a commercially available product include JSR DYNARON® (DYNARON is a registered trademark in Japan, other countries, or both) 8903P and 9901P of JSR Corporation.

The amount of the styrene-alkylene block copolymer may be appropriately adjusted within a range of 1 part by mass to 85 parts by mass with respect to 100 parts by mass of the rubber component (A). For example, it is 1 part by mass or more, 2 parts by mass or more, 5 parts by mass or more, 10 parts by mass or more, 15 parts by mass or more, 20 parts by mass or more, 30 parts by mass or more, 40 parts by mass, 50 parts by mass or more, 60 parts by mass or more, 70 parts by mass or more, or 80 parts by mass or more with respect to 100 parts by mass of the component (A). Further, the amount of the styrene-alkylene block copolymer is 80 parts by mass or less, 70 parts by mass or less, 60 parts by mass or less, 50 parts by mass or less, 40 parts by mass or less, 30 parts by mass or less, 20 parts by mass or less, 15 parts by mass or less, 10 parts by mass or less, or 5 parts by mass or less with respect to 100 parts by mass of the component (A), for example.

The component (C) may or may not contain other thermoplastic resins in addition to the styrene-alkylene block copolymer. The other thermoplastic resin may be a known thermoplastic resin.

### -Polyester polyol

Examples of the other thermoplastic resin include polyester polyol. The polyester polyol is not particularly limited, and known polyester polyol can be appropriately selected and used. Examples of the polyester polyol include polyester polyol obtained by reacting a polyvalent carboxylic acid such as a dicarboxylic acid or a tricarboxylic acid with a polyhydric alcohol.

Examples of the polyvalent carboxylic acid include an aliphatic dicarboxylic acid such as oxalic acid, malonic acid, succinic acid, glutaric acid, adipic acid, pimelic acid, suberic acid, azelaic acid, and sebacic acid; an aromatic dicarboxylic acid such as phthalic acid, isophthalic acid, and terephthalic acid; and a tricarboxylic acid such as propane-1,2,3-tricarboxylic acid, 1,3,5-pentanetricarboxylic acid, and trimesic acid.

Examples of the polyhydric alcohol include a dihydric alcohol such as ethylene glycol, propylene glycol, and diethylene glycol; and a trihydric alcohol such as glycerin.

In one embodiment, the thermoplastic resin (C) further contains polyester polyol.

The polyester polyol is preferably a polyester polyol resin having an aromatic ring in its molecular structure.

The polyester polyol resin having an aromatic ring is preferably a polyester polyol resin having an aromatic ring in the main chain or side chain, and from the viewpoint of insolubility in water, it is more preferably a polyester polyol resin having an aromatic ring in the main chain.

Examples of the polyester polyol resin having an aromatic ring include a resin that is a polycondensate of an aromatic polyvalent carboxylic acid and a polyhydric alcohol and has two or more hydroxyl groups in one molecule, and a resin that is a polycondensate of a polyvalent carboxylic acid and an aromatic polyhydric alcohol and has two or more hydroxyl groups in one molecule.

Examples of the aromatic polyvalent carboxylic acid include an aromatic dicarboxylic acid such as isophthalic acid, phthalic acid, terephthalic acid, furan dicarboxylic acid, diphenyl dicarboxylic acid and naphthalene dicarboxylic acid, and an aromatic tricarboxylic acid such as naphthalene tricarboxylic acid. The aromatic polyvalent carboxylic acid is preferably an aromatic dicarboxylic acid.

Examples of the polyhydric alcohol include a dialcohol and a trialcohol. Specific examples of the polyhydric alcohol include ethylene glycol, diethylene glycol, triethylene glycol, 1,6-hexanediol, methylpentanediol, propylene glycol, dipropylene glycol, 1,4-butanediol, trimethylolethane, trimethylolpropane, and neopentyl glycol. The polyhydric alcohol is preferably a dialcohol.

Examples of the polyvalent carboxylic acid include oxalic acid, malonic acid, succinic acid, succinic anhydride, glutaric acid, adipic acid, pimelic acid, suberic acid, sebacic acid, and azelaic acid.

Examples of the aromatic polyhydric alcohol include 1,2-benzenedimethanol, 1,3-benzenedimethanol, 1,4-benzenedimethanol, bisphenol A, and resorcinol.

Examples of a commercially available polyester polyol resin having an aromatic ring include the Zeofine® (Zeofine is a registered trademark in Japan, other countries, or both) series such as the product name "Zeofine 100" manufactured by Zeon Corporation.

In the present disclosure, the weight average molecular weight (Mn) of the polyester polyol resin having an aromatic ring is preferably 20,000 to 100,000 and preferably 30,000 to 80,000. When the Mn is 20,000 or more, it is easy to reduce or suppress solubility in water because of the molecular weight effect. Further, when the Mn is 100,000 or less, it is easily compatible with other components. Note that in the present disclosure, the Mn is measured by GPC (gel permeation chromatography). The Mn is a standard polystyrene-equivalent molecular weight.

In the present disclosure, the polyester polyol resin having an aromatic ring preferably has a hydroxyl value of 45 mgKOH/g to 78 mgKOH/g. The number of hydroxyl groups in one molecule of the polyester polyol resin is preferably 3 or more.

The polyester polyol resin having an aromatic ring may be used alone or in combination of two or more.

The amount of the polyester polyol resin having an aromatic ring is, for example, 0.1 parts by mass to 20 parts by mass or 1 part by mass to 20 parts by mass with respect to 100 parts by mass of the rubber component (A).

In the rubber composition of the present disclosure, the thermoplastic resin (C) further contains polyester polyol.

The amount of the polyester polyol is preferably 1 part by mass to 20 parts by mass with respect to 100 parts by mass of the rubber component (A).

In this way, it is possible to achieve both the steering stability and the low rolling resistance at a higher level.

Examples of a thermoplastic resin other than the polyester polyol include Cs-based resin, Cs to C₉-based resin, C₉-based resin, terpene-based resin, terpene-aromatic compound-based resin, rosin-based resin, dicyclopentadiene resin, and alkylphenol-based resin described in WO 2015/07973 and WO 2017/077712.

The total amount of the thermoplastic resin other than the styrene-alkylene block copolymer may be appropriately adjusted. For example, it is 1 part by mass or more, 2 parts by mass or more, 5 parts by mass or more, 10 parts by mass or more, 15 parts by mass or more, 20 parts by mass or more, 30 parts by mass or more, or 40 parts by mass with respect to 100 parts by mass of the component (A). Further, the total amount of the thermoplastic resin other than the styrene-alkylene block copolymer is 50 parts by mass or less, 40 parts by mass or less, 30 parts by mass or less, 20 parts by mass or less, 15 parts by mass or less, 10 parts by mass or less, or 5 parts by mass or less with respect to 100 parts by mass of the component (A), for example.

The component (C) may be used alone or in combination of two or more.

In one embodiment, the component (C) is only a styrene-alkylene block copolymer.

The amount of the component (C) is 1 part by mass to 85 parts by mass with respect to the component (A). For example, it is 1 part by mass or more, 2 parts by mass or more, 5 parts by mass or more, 10 parts by mass or more, 15 parts by mass or more, 20 parts by mass or more, 30 parts by mass or more, 40 parts by mass or more, 50 parts by mass or more, 60 parts by mass or more, 70 parts by mass or more, or 80 parts by mass or more with respect to 100 parts by mass of the component (A). Further, the amount of the component (C) is 80 parts by mass or less, 70 parts by mass or less, 60 parts by mass or less, 50 parts by mass or less, 40 parts by mass or less, 30 parts by mass or less, 20 parts by mass or less, 15 parts by mass or less, 10 parts by mass or less, or 5 parts by mass or less with respect to 100 parts by mass of the component (A), for example.

### <Other components>

In addition to the above-described components, the rubber composition of the present disclosure may contain components that are commonly used in the rubber industry, such as a softener, a vulcanization accelerator, a silane coupling agent, a vulcanizing agent, an age resistor, a vulcanization acceleration aid, and an organic acid compound. These can be appropriately selected and contained within a range without departing from the spirit of the present disclosure.

For the rubber composition of the present disclosure, hard physical properties can be obtained by blending a large amount of sulfur. When too much sulfur is blended, thermal aging resistance is deteriorated. Therefore, the amount of sulfur is preferably 8 parts by mass to 11 parts by mass with respect to 100 parts by mass of the rubber component (A).

Further, for the rubber composition of the present disclosure, the amount of zinc oxide is preferably 5 parts by mass to 9 parts by mass with respect to 100 parts by mass of the rubber component (A), so that an efficient vulcanization reaction is realized with the blending amount of sulfur in the preferable range described above.

### (Method of preparing rubber composition)

The method of preparing the rubber composition of the present disclosure is not particularly limited, and components such as the component (A), the component (B) and the component (C) may be kneaded with a known kneading method.

The rubber composition of the present disclosure is suitably for tires.

The rubber composition of the present disclosure is suitably for a base tread portion.

In this way, it is possible to achieve both the steering stability and the low rolling resistance of a tire more effectively.

### (Tire)

A tire of the present disclosure is a tire using any of the above-described rubber compositions in a base tread portion.

In this way, it is possible to achieve both the steering stability and the low rolling resistance of a tire at a high level.

### EXAMPLES

The following describes the present disclosure in more detail with reference to Examples. Note that these Examples are for the purpose of exemplifying the present disclosure and do not limit the present disclosure in any way. In the Examples, the blending amount is in part by mass unless otherwise specified.

The details of the materials used in the Examples are as follows.

### Component (A)

NR: Tg = -60 °C
SBR: Product name "JSR 1500" manufactured by JSR Corporation, Tg = -55 °C
BR: "JSR BR01" manufactured by JSR Corporation, Tg = -100 °C

### Component (B)

Carbon black 1: Product name "#70L" manufactured by Asahi Carbon Co., Ltd., N₂SA = 84 m²/g
Carbon black 2: N₂SA = 69 m²/g
Carbon black 3: Product name "VULCAN 7H" manufactured by Cabot Corporation, N₂SA = 117 m²/g

### Component (C)

Styrene-alkylene block copolymer: Product name "DYNARON® 9901P" (SEBS) manufactured by JSR Corporation, where a ratio of the unit (C_{A}) to the total mass of the unit (C_{A}) and the unit (C_{B}) is 70 mass%, and a total styrene content is 53 mass%
Polyester polyol: Product name "Zeofine® 100M" manufactured by Zeon Corporation

### (Others)

Wax: Microcrystalline wax, product name "OZOACE-0701" manufactured by Nippon Seiro Co., Ltd.
Age resistor: N-(1,3-dimethylbutyl)-N'-phenyl-p-phenylenediamine (6PPD), product name "NOCRAC® 6C" (NOCRAC is a registered trademark in Japan, other countries, or both) manufactured by Ouchi Shinko Chemical Industrial Co., Ltd.
Age resistor: 2,2,4-trimethyl-1,2-dihydroquinoline polymer (TMQ), product name "NOCRAC® 224" manufactured by Ouchi Shinko Chemical Industrial Co., Ltd.
Vulcanization accelerator: 1,3-diphenylguanidine (DPG), product name "SOXINOL® D-G" (SOXINOL is a registered trademark in Japan, other countries, or both) manufactured by SUMITOMO CHEMICAL COMPANY, LIMITED
Vulcanization accelerator: Di (2-benzothiazolyl) persulfide (MBTS), product name "NOCCELER® DM" (NOCCELER is a registered trademark in Japan, other countries, or both) manufactured by Ouchi Shinko Chemical Industrial Co., Ltd.
Vulcanization accelerator: N-cyclohexylbenzothiazole-2-sulfenamide (CBS), product name "NOCCELER® CZ" manufactured by Ouchi Shinko Chemical Industrial Co., Ltd.

### <Preparation and evaluation of rubber composition>

Rubber compositions are prepared using a normal Banbury mixer with the components listed in Tables 1 to 3, and the rubber compositions are used for a base tread portion to prepare pneumatic radial tires for passenger vehicles in size of 195/65R15. In Example 1, a rubber composition was prepared using a normal Bunbury mixer. Further, in Example 1, the rubber composition was used for a base tread portion to prepare a pneumatic radial tire for passenger vehicles in size of 195/65R15. The rubber compositions or the tires are predictively evaluated in terms of steering stability, low rolling resistance, and compatibility between the two properties with the following methods. The rubber composition and the tire of Example 1 were evaluated in terms of steering stability, rolling resistance, and compatibility between the two properties with the following methods. The results are listed in Tables 1 to 3.

### <Steering stability>

Steering stability was evaluated by cornering power. In Example 1, the cornering power was measured using a flat belt-type cornering tester. The cornering force was measured under conditions where the belt speed was 100 km/h and the slip angle (SA) between the rolling direction of the tire and the circumferential direction of the drum was 1 °. The cornering force of Comparative Example 1 was set as 100 as an index. The larger the index value is, the larger the cornering power is, and the better the steering stability is.

### <Low rolling resistance>

The loss tangent (tanδ) of a vulcanized rubber obtained by vulcanizing the rubber composition at 145 °C for 33 minutes was measured by a GABO viscoelasticity tester under the conditions of a temperature of 50 °C, an initial strain of 2 %, a dynamic strain of 1 %, and a frequency of 15 Hz. The reciprocal of the loss tangent of Comparative Example 1 was set as 100 as an index. The larger the index value is, the lower the rolling resistance is, and the better the low rolling resistance is.

### <Compatibility between two properties>

The compatibility between the steering stability and the low rolling resistance was evaluated according to the following criteria. The results are also listed in Tables 1 to 3.
A: the index values of both properties are 105 or more
B: the index values of both properties are 100 or more, and the index value of at least one property is 104 or less
C: the index value of at least one property is 99 or less

**Table 1**

| | | Comparative Example 1 | Example 1 |
|---|---|---|---|
| Rubber component | NR | 30 | 30 |
| | SBR | 40 | 40 |
| | BR | 30 | 30 |
| Filler | CB1 | 80 | 70 |
| Thermoplastic resin | Polyester polyol | 0 | 5 |
| | SEBS | 0 | 45 |
| Softener | Microcrystalline wax | 1.5 | 0 |
| Vulcanization accelerator | | 3 | 3 |
| Sulfur | | 1.5 | 9 |
| Other components | | 5.5 | 11 |
| Performance | Steering stability | 100 | 145 |
| | Low rolling resistance | 100 | 107 |
| | Compatibility between two properties | B | A |

**Table 2**

| | | Comparative Example 2 | Example 2 |
|---|---|---|---|
| Rubber component | NR | 30 | 30 |
| | SBR | 40 | 40 |
| | BR | 30 | 30 |
| Filler | CB1 | 80 | 80 |
| Thermoplastic resin | Polyester polyol | 0 | 0 |
| | SEBS | 0 | 10 |
| Softener | Wax | 1.5 | 1.5 |
| Vulcanization accelerator | | 3 | 3 |
| Sulfur | | 1.5 | 1.5 |
| Other components | | 5.5 | 5.5 |
| Performance | Steering stability | 100 | 108 |
| | Low rolling resistance | 100 | 100 |
| | Compatibility between two properties | B | B |

**Table 3**

| | | Comparative Example 3 | Comparative Example 4 | Comparative Example 5 | Comparative Example 6 | Example 3 | Example 4 | Example 5 | Example 6 | Example 7 | Example 8 | Example 9 |
|---|---|---|---|---|---|---|---|---|---|---|---|---|
| Rubber component | NR | 30 | 30 | 30 | 40 | 30 | 70 | 0 | 60 | 30 | 30 | 60 |
| | SBR | 40 | 40 | 40 | 60 | 40 | 30 | 30 | 0 | 40 | 40 | 0 |
| | BR | 30 | 30 | 30 | 0 | 30 | 0 | 70 | 40 | 30 | 30 | 40 |
| Filler | CB1 | 70 | 80 | 100 | 75 | 80 | 0 | 0 | 50 | 70 | 70 | 70 |
| | CB2 | 0 | 0 | 0 | 0 | 0 | 0 | 70 | 0 | 0 | 0 | 0 |
| | CB3 | 0 | 0 | 0 | 0 | 0 | 40 | 0 | 0 | 0 | 0 | 0 |
| Thermoplastic resin | Polyester polyol | 0 | 0 | 0 | 25 | 0 | 0 | 0 | 0 | 0 | 1 | 20 |
| | SEBS | 0 | 0 | 0 | 65 | 10 | 60 | 10 | 50 | 15 | 15 | 40 |
| Softener | Wax | 5 | 5 | 5 | 5 | 5 | 5 | 5 | 5 | 5 | 5 | 5 |
| Vulcanization accelerator | | 3 | 3 | 3 | 3 | 3 | 3 | 3 | 3 | 3 | 3 | 3 |
| Sulfur | | 1.5 | 1.5 | 1.5 | 1.5 | 1.5 | 1.5 | 1.5 | 1.5 | 1.5 | 1.5 | 1.5 |
| Other components | | 4.5 | 4.5 | 4.5 | 4.5 | 4.5 | 4.5 | 4.5 | 4.5 | 4.5 | 4.5 | 4.5 |
| Performance | Steering stability | 86 | 93 | 107 | 213 | 100 | 100 | 100 | 100 | 102 | 106 | 135 |
| | Low rolling resistance | 113 | 100 | 81 | 92 | 100 | 132 | 120 | 126 | 113 | 110 | 107 |
| | Compatibility between two properties | C | C | C | C | B | B | B | B | B | A | A |

As indicated in Table 1, with the rubber composition of the present disclosure, it is possible to achieve both the steering stability and the low rolling resistance at a high level.

### INDUSTRIAL APPLICABILITY

According to the present disclosure, it is possible to provide a rubber composition in which both the steering stability and the low rolling resistance are achieved at a high level. According to the present disclosure, it is possible to provide a tire in which both the steering stability and the low rolling resistance are achieved at a high level.

## Claims

1. A rubber composition comprising a rubber component (A), a filler (B), and a thermoplastic resin (C), wherein
the filler (B) contains carbon black,
an amount of the carbon black is 30 parts by mass to 90 parts by mass with respect to 100 parts by mass of the rubber component (A),
an amount of the thermoplastic resin (C) is 1 part by mass to 85 parts by mass with respect to 100 parts by mass of the rubber component (A),
the thermoplastic resin (C) contains a styrene-alkylene block copolymer, and
an alkylene block of the styrene-alkylene block copolymer has a -(CH₂-CH(C₂H₅))- unit (C_{A}) and a -(CH₂-CH₂)- unit (C_{B}), and a total content of the unit (C_{A}) is 40 mass% or more with respect to total mass of the unit (C_{A}) and the unit (C_{B}).

2. The rubber composition according to claim 1, wherein the rubber component (A) is at least one selected from the group consisting of natural rubber, synthetic isoprene rubber, styrene butadiene rubber and butadiene rubber.

3. The rubber composition according to claim 1 or 2, wherein the carbon black has a nitrogen adsorption specific surface area (N₂SA) of 40 m²/g to 150 m²/g.

4. The rubber composition according to any one of claims 1 to 3, wherein the styrene-alkylene block copolymer has a total styrene content of 40 mass% or more.

5. The rubber composition according to any one of claims 1 to 4, wherein
the thermoplastic resin (C) further contains polyester polyol, and
an amount of the polyester polyol is 1 part by mass to 20 parts by mass with respect to 100 parts by mass of the rubber component (A).

6. The rubber composition according to any one of claims 1 to 5, wherein an amount of sulfur in the rubber composition is 8 parts by mass to 11 parts by mass with respect to 100 parts by mass of the rubber component (A).

7. The rubber composition according to any one of claims 1 to 5, wherein an amount of zinc oxide in the rubber composition is 5 parts by mass to 9 parts by mass with respect to 100 parts by mass of the rubber component (A).

8. The rubber composition according to any one of claims 1 to 7, which is used for a base tread portion.

9. A tire using the rubber composition according to any one of claims 1 to 8 for a base tread portion.
